Europäisches Patentamt

European Patent Office

Office européen des brevets

(11) Numéro de publication: **0 044 796**
**B1**

(12) **FASCICULE DE BREVET EUROPEEN**

(19)

(45) Date de publication du fascicule du brevet: 25.01.84

(21) Numéro de dépôt: **81420107.5**

(22) Date de dépôt: **16.07.81**

(51) Int. Cl.³: **F 16 B 9/02,** A 47 B 37/04, A 45 B 11/00

(54) **Bague de serrage pour parasol.**

(30) Priorité: **22.07.80 FR 8016395**

(43) Date de publication de la demande: **27.01.82 Bulletin 82/4**

(45) Mention de la délivrance du brevet: **25.01.84 Bulletin 84/4**

(84) Etats contractants désignés: **AT BE CH DE GB IT LI LU NL SE**

(56) Documents cités:
**CA - A - 1 028 475**
**FR - A - 1 295 885**
**FR - A - 1 403 403**
**FR - A - 2 259 563**
**FR - A - 2 298 682**
**GB - A - 836 167**
**GB - A - 1 273 776**
**US - A - 2 190 222**
**US - A - 2 603 543**
**US - A - 2 621 007**
**US - A - 3 434 484**
**US - A - 3 990 671**

(73) Titulaire: **SOCIETE D'EXPLOITATION CLAIRITEX, Saint Clair de la Tour, F-38110 La Tour du Pin (FR)**

(72) Inventeur: **Comte, Pierre, Boulevard Victor Hugo, F-38110 La Tour Du Pin (FR)**

(74) Mandataire: **Maureau, Bernard, Cabinet GERMAIN & MAUREAU Le Britannia - Tour C 20, Boulevard Eugène Déruelle, F-69003 Lyon (FR)**

Bague de serrage pour parasol.

L'invention a pour objet une bague de serrage pour parasol.

Il est courant d'associer un parasol à une table de jardin et de munir un parasol d'un mât qui, passant au travers d'un trou percé dans le plateau de la table, est constitué de deux éléments articulés permettant de donner à la tête du parasol l'orientation la plus favorable pour maintenir la table et ses occupants à l'abri du soleil. Lorsque la tête du parasol est ainsi inclinée par rapport à son mât, elle constitue effectivement une protection efficace vis-à-vis du soleil, mais elle offre une telle surface inclinée que, en cas de brise, il en résulte la rotation du parasol, à moins que le mât ne soit immobilisé par un socle lui servant de pied.

De tels pieds sont bien connus, mais ils ne peuvent pas être utilisés dans tous les cas; et c'est ainsi notamment que leur emploi est impossible avec des tables dont le piètement comporte des traverses.

L'invention pallie cette lacune. Elle a pour objet une bague de serrage de mât de parasol qui est fendue et dont les diamètres extérieur et intérieur sont déterminés respectivement pour permettre son passage dans le trou du plateau de la table ou autre meuble, et pour permettre le passage du mât, cette bague comportant un trou taraudé à direction radiale: et inclinée par rapport à l'axe de la bague, et dont l'orifice extérieur est situé hors du plateau de la table lorsque la bague est montée dans ce plateau, et servant de logement à une vis qui, en prenant appui sur le mât expand radialement ladite bague et l'immobilise dans le trou de la table. Grâce à cet agencement, le même organe, en l'occurence une simple vis, permet à la fois le blocage de la bague dans la table et le blocage du mât dans la bague, ce dont il résulte le blocage du mât par rapport à la table. Pour faciliter sa manœuvre manuelle, la vis est avantageusement munie d'une tête méplate. Les caractéristiques connues de l'objet de l'invention (priambule de la revendication 1) sont issues du document US-A-3 434 484.

L'invention sera bien comprise d'ailleurs à l'aide de la description qui suit, en référence au dessin schématique annexé représentant, à titre d'exemple non limitatif, une forme d'exécution de cette bague de serrage pour parasol, dans le cas où ce parasol est adapté sur une table:

Figure 1 est une vue en perspective du parasol et de la table;

Figures 2 et 3 sont, à plus grande échelle, des vues respectivement en élévation et en plan par dessus de la bague de serrage, et

Figure 4 est une vue en coupe verticale de la bague en position dans la table.

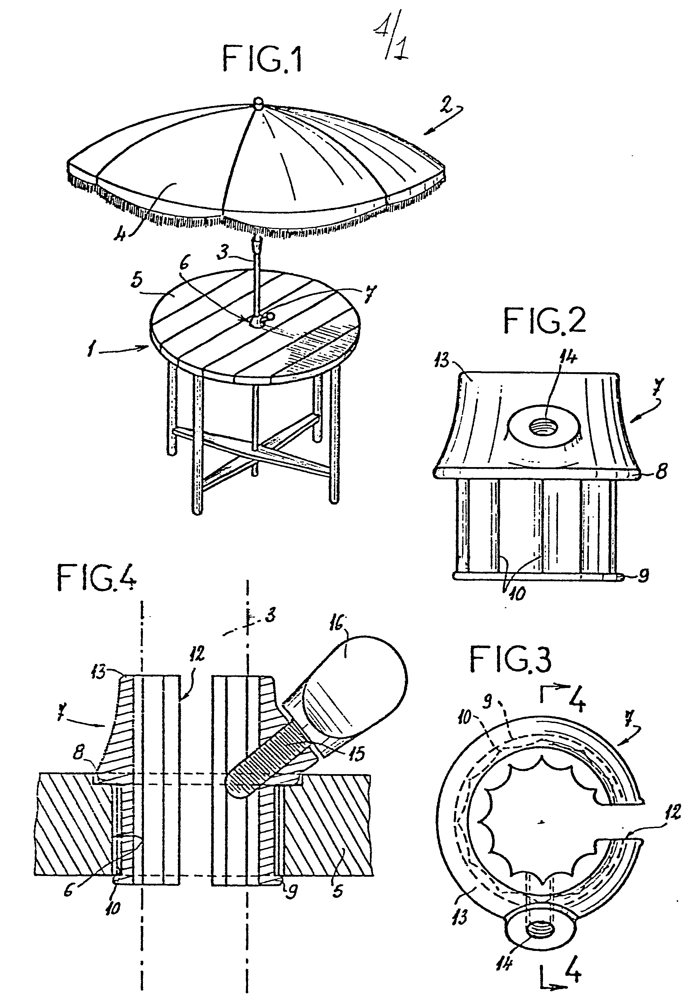

A la figure 1, 1 désigne de façon générale une table et 2 désigne le parasol, constitué d'un mât 3 et d'une tête 4 jouant à proprement parler le rôle de parasol.

Comme cela est connu en soi, le plateau 5 de la table 1 présente un trou 6 destiné au passage du mât 3 du parasol; mais conformément à l'invention, le trou 6 sert de logement à une bague 7 dont le rôle est de servir au passage et au blocage du mât 3 du parasol.

Cette bague 7, qui est représentée en détail aux figures 2 à 4, se termine à sa partie supérieure et à sa partie inférieure par des épaulements qui, désignés respectivement par 8 et par 9, ont un écartement légèrement supérieur à l'épaisseur du plateau 5, ou du moins à l'épaisseur du plateau dans sa zone située à la périphérie du trou 6; et sur sa face extérieure, la bague 7 présente des fines nervures longitudinales 10 qui s'étendent entre les épaulements 8 et 9 et sont destinées, comme cela sera décrit ci-après, à permettre un bon accrochage de la bague à l'intérieur du trou 6 du plateau de la table.

La bague 7 présente deux autres particularités essentielles, à savoir:
– elle comporte une fente radiale 12 s'étendant sur toute son épaisseur et sur toute sa hauteur,
– et elle comporte, dans une zone de sa partie supérieure, une ceinture 13 dans laquelle est aménagé un trou taraudé 14 dont la direction est à la fois radiale et inclinée par rapport à l'axe longitudinal de la bague. Ce trou taraudé est destiné au vissage de la tige filetée 15 d'une vis dont la tête 16 se trouve située au-dessus du plateau 5 de la table, lorsque la bague 7 a été introduite dans le trou 6 de ce plateau.

Les modes d'utilisation et de fonctionnement de cette bague de serrage se conçoivent aisément: grâce à son élasticité transversale résultant de la présence de sa fente 12, la bague 7 est facilement introduite à l'intérieur du trou 6 aménagé dans le plateau 5 de la table; et elle s'y maintient d'elle-même, en raison de la présence de ses deux épaulements respectivement supérieur 8 et inférieur 9. Le bague ayant ainsi été mise en place dans le plateau de la table, le mât 3 du prasol est lui-même introduit dans la bague et y coulisse librement en translation et en rotation, car son diamètre extérieur est inférieur au diamètre intérieur de la bague 7.

Lorsque la position la plus favorable a été donnée au parasol par rapport à la table, l'immobilisation de l'ensemble est obtenue par simple vissage de la vis 16. Ce vissage amène en effet la pointe de la vis à prendre appui contre le mât 3 du parasol, ce qui amène la bague 7 à s'expandre radialement grâce à sa fente 12, et à s'immobiliser ainsi à l'intérieur du trou 6 que comporte le plateau 5 de la table; au cours de cette expansion de la bague, les nervures 10 de la bague s'ancrent en effet à l'intérieur du trou 6 du plateau, de telle sorte que la bague ne peut pas tourner par rapport à la table. Le mât 3 du parasol peut lui-même présenter un relief extérieur tel que, grâce au serrage de la vis 16, il ne puisse pas tourner par rapport à la vis. Des nervures intérieures peuvent d'ailleurs aussi être prévues dans la bague 7 pour éviter toute possibilité de rotation du mât lorsqu'il est maintenu en appui contre la bague par serrage de la vis.

Il est à remarquer que la fente 12 de la bague 7 est relativement large, comme le montre bien la figure 3.

Cette largeur permet de diminuer élastiquement et suffisamment le diamètre de la bague pour faciliter son introduction dans le trou 6 du plateau 5 de la table; mais cette largeur est aussi prévue pour permettre le libre passage d'au moins un conducteur électrique. Il est ainsi possible de faire passer et arriver par dessous la table le ou les conducteurs électriques servant à l'alimentation d'un éclairage ou de tout autre appareil placé au-dessus ou sur la table.

Comme il va de soi, l'invention ne se limite pas à la seule forme d'exécution de cette bague de serrage qui a été ci-dessus indiquée à titre d'exemple; elle en embrasse, au contraire, toutes les variantes de réalisation, quel que soit bien entendu le matériau de la bague; et c'est ainsi que dans le cas d'une bague constituée en résine synthétique moulée, tel qu'en polyamide, il est avantageux de prévoir dans sa paroi interne de larges nervures longitudinales dont le but essentiel est de diminuer le poids et donc le prix de la bague. Il est en outre évident qu'une bague de serrage conforme à l'invention peut être utilisée pour l'immobilisation d'un parasol, non pas seulement par rapport à une table mais aussi par rapport à tout autre meuble, par exemple une chaise longue, l'essentiel étant qu'un trou soit percé dans le meuble pour servir de logement à la bague de serrage du mât du parasol.

## Revendications

1. Bague (7) de serrage de mât (3) de parasol passant au travers d'un trou (6) percé dans une table ou tout autre meuble, caractérisée en ce qu'elle présente une fente radiale (12) s'étendant sur toute sa hauteur et sur toute son épaisseur, en ce que ses diamètres extérieur et intérieur sont déterminés pour permettre son passage dans le trou (6) de la table ou autre meuble et pour permettre le passage du mât (3), et en ce qu'elle comporte un trou taraudé (14) à direction radiale et inclinée par rapport à l'axe de la bague (7), et dont l'orifice extérieur est situé hors du plateau de la table (5) lorsque la bague (7) est montée dans ce plateau, et servant de logement à une vis (15) qui, en prenant appui sur le mât, expand radialement la bague et l'immobilise dans le trou de la table ou autre meuble.

2. Bague de serrage pour parasol selon la revendication 1, caractérisée en ce qu'elle comporte un épaulement supérieur (8) et un épaulement inférieur (9) dont l'écartement est supérieur à l'épaisseur du plateau (5) ou autre élément du meuble dans lequel est percé le trou (6) servant de logement à la bague, et en ce que sa paroi extérieure comporte des nervures longitudinales (10) s'étendant entre les épaulements précités (8 et 9).

3. Bague de serrage pour parasol selon la revendication 1, caractérisée en ce que sa fente radiale (12) possède une largeur suffisante pour servir au libre passage d'au moins un conducteur électrique.

## Patentansprüche

1. Spannring (7) zum Festklemmen eines Sonnenschirmstabes (3), der durch eine in einem Möbelteil, insbesondere einem Tisch, vorgesehene Öffnung (6) hindurchtritt, dadurch gekennzeichnet, dass der Spannring (7) einen radialen Spalt (12) besitzt, der sich über seine gesamte Höhe und seine gesamte Dicke erstreckt, dass sein Aussendurchmesser und sein Innendurchmesser so bemessen sind, dass er die genannte Öffnung (6) des Möbelteils durchdringen und der Sonnenschirmstab (3) ihn durchdringen kann, und dass er (7) eine radial und zur Achse des Sonnenschirmstabs (3) geneigt verlaufende Gewindebohrung (14) aufweist, deren Aussenmündung sich ausserhalb der Platte (5) des Möbelteils befindet, wenn der Spannring (7) in dieser Platte montiert ist und die (14) zur Aufnahme einer Schraube (15) dient, welche sich gegen den Sonnenschirmstab (3) abstützt und mittels derer der Spannring (7) radial expandierbar und in der Öffnung (5) des Möbelteils fixierbar ist.

2. Spannring nach Anspruch 1, dadurch gekennzeichnet, dass er eine obere Schulter (8) sowie eine untere Schulter (9) besitzt, deren gegenseitiger Abstand grösser ist als die Dicke der Platte (5) des Möbelteils, in welcher die zur Aufnahme des Spannrings (7) dienende Öffnung (6) angebracht ist, und dass die Aussenwandung des Spannrings (7) Längsrippen (10) aufweist, die sich zwischen den genannten Schultern (8, 9) erstrecken.

3. Spannring nach Anspruch 1, dadurch gekennzeichnet, dass der radiale Spalt (12) eine Breite besitzt, die ausreichend gross ist, um den Durchgang wenigstens einer elektrischen Leitung zu ermöglichen.

## Claims

1. Clamping sleeve (7) for a parasol mast (3) which is to pass through a hole (6) in a table or other item of furniture, characterised in that it has a radial slot (12) extending over all of its height and through all of its thickness, in that its external and internal diameters are determined so as to allow it to pass into the hole (6) in the table or other item of furniture and to permit entry of the mast (3) and in that it includes a radially-directed threaded hole (14) inclined to the axis of the sleeve (7) and having an external orifice situated outside the table top (5) whilst the sleeve (7) is mounted within this top and acting as a housing for a screw (15) which, in pressing against the mast, radially expands the sleeve and locks it within the hole in the table or other item of furniture.

2. Locking sleeve for a parasol according to claim 1, characterised in that it includes an upper shoulder (8) and lower shoulder (9) which are spaced apart by a distance greater than the thickness of the top (5) or other furniture element through which extends the hole (6) acting as the housing for the sleeve, and in that its external wall includes longitudinal ribs (10) extending between said shoulders (8 and 9).

3. Locking sleeve for a parasol according to claim 1, characterised in that the radial slot (12) is wide enough to allow the free passage of at least one electrical conductor.

FIG.1

4/1

2

4

3

6

5

7

1

FIG.2

13

14

7

8

10

9

FIG.4

13

12

3

16

7

15

8

6

10

9

5

FIG.3

10

9

4

7

12

13

14

4